# EUROPEAN PATENT SPECIFICATION

(11) **EP 4 620 885 B1**
(45) Date of publication and mention of the grant of the patent: **29.04.2026**
(21) Application number: 24165681.8
(22) Date of filing: 22.03.2024
(51) Int. Cl.: B66C 1/10, F03D 13/10, F03D 80/50

(54) **WIND TURBINE GENERATOR LIFTING DEVICE AND METHODS OF USING THE SAME**
WINDTURBINENGENERATORHEBEVORRICHTUNG UND VERFAHREN ZUR VERWENDUNG DAVON
DISPOSITIF DE LEVAGE DE GÉNÉRATEUR D'ÉOLIENNE ET SES PROCÉDÉS D'UTILISATION

(43) Date of publication of application: 24.09.2025
(73) Proprietor: Ørsted Wind Power A/S, 7000 Fredericia Skaerbaek (DK)
(72) Inventor: KASTRUP, Michael, DK-7000 Fredericia (DK); JARAMILLO, Mauricio Almiray, DK-7000 Fredericia (DK)
(74) Representative: Lewis Silkin LLP

(56) References cited:
- WO-A1-2022/144061
- US-A1- 2013 147 218
- US-A1- 2021 024 333

## Description

The present invention concerns a wind turbine generator lifting device and methods of removing, conveying and replacing a wind turbine generator using the lifting device. The invention is particularly relevant to wind turbine generator decommissioning and devices, such as lifting tools, used with a crane for removing and replacing wind turbine generators from wind turbine nacelles. The invention is also relevant to a device and method of transporting a wind turbine generator. The invention is most particularly relevant to devices and methods for offshore replacement of wind turbine generators.

Offshore wind has become an increasingly important part of our energy supply infrastructure. As existing offshore wind installations age, there is a need to replace parts, systems and components within them over time. The generator which rotatably connects the blade hub to the nacelle and generates electricity as the hub rotates is one part which often needs replacement, maintenance, or refurbishment. In particular, the generator is a complex assembly because it comprises both mechanical bearings and electrical systems and is relatively exposed to the marine environment. This means that this part has a comparatively limited lifespan compared to the wind turbine installation as a whole. Generator technology also improves over time, and hence generator updates may allow for improved efficiency.

There are however significant challenges with removing and replacing offshore wind turbine generators. Inherently, the marine environment makes operations significantly more complex than they would be onshore and necessitates the use of specialist equipment and vessels. Currently, the most common method of removing the generator involves detaching the blades, and then lifting the entire nacelle and generator assembly as one piece from the up-tower location down to a vessel. Once on deck, a tool is used to support the generator as it is tilted away from the front face of the nacelle, and laid horizontally on the deck, from where it can be worked on, or stored for transport. This is preferred because operation in an up-tower location is made difficult by the weight of the generator and the movement between the top of the wind turbine tower and the crane. However, lifting the entire nacelle and generator requires a large crane jack-up vessel, as well as significant deck space for accommodating both the nacelle and the generator once it is detached. The specialisation and complexity of the vessels used in these operations mean that they are extremely expensive. Furthermore, the limitation of deck space means that only one generator can typically be replaced at a time, resulting in replacement operations being very slow, which only exacerbates the cost. US 2013/0147218 relates to a lifting bracket for a wind turbine generator, according to the preamble of claim 1.

The present invention therefore seeks to address the above issues.

According to a first aspect of the present invention, there is provided a wind turbine generator lifting device for conveying a wind turbine generator, wherein the wind turbine generator has a hub face to which a blade hub is attachable to the generator and a nacelle face to which the generator is attachable to a nacelle, the device comprising: a frame having a crane coupling for hoisting by a crane; a first coupling connectable to the hub face for mounting the generator onto the frame in a first mounted configuration; and a second coupling connectable to the nacelle face for mounting the generator onto the frame in a second mounted configuration.

In this way, a lifting device is provided which can be hoisted to an up-tower location by a crane and connected to an exposed hub face of the generator, allowing it to be removed without having to detach the nacelle too. This minimises the lifting weight and complexity of this operation and reduces the space requirements on deck to seat the generator once it is down-tower. Furthermore, the provision of the first and second couplings allows the frame to be connected to either of the front and rear faces of the wind turbine generator. This may provide important advantages because it allows flexibility about how the generator, once detached from the nacelle, is lifted and manipulated. That is, a single tool may be used to lift a generator down from the nacelle, store the generator, and lift it out of storage. In embodiments, the generator is a direct drive generator.

In embodiments, the first coupling comprises a first mounting interface configured to couple with a corresponding first mounting interface on the hub face of the generator. In embodiments, the first mounting interface may correspond to the mounting interface provided on the blade hub. This may thereby allow the frame to be fixed to the generator using the same connection provided for the blade hub.

In embodiments, the first mounting interface comprises keying formations for mating with corresponding keying formations provided on the corresponding first mounting interface on the hub face. In this way, the keying formations provided on the opposing faces may inter-engage to ensure alignment between these parts.

In embodiments, the keying formations comprise a plurality of pins or apertures configured to mate into corresponding apertures or pins, respectively, provided on the corresponding first mounting interface. In this way, pins provided on one of the first coupling or the hub face of the generator may be received into apertures provided on the other of the first coupling or the hub face. This may thereby ensure alignment of the fixture and help to resist movement at the interface between these parts.

In embodiments, the wind turbine generator lifting device further comprises a yaw control system having at least one propeller actuatable for yawing the frame in the air when it is hoisted by the crane. In this way, the twisting or oscillation of the frame about the hoisting line can be controlled using the one or more propellers. This may thereby provide rotational control about the vertical axis without needing to provide tag lines. This thereby avoids the complexity and deck space needed to manage tag lines during hoisting operations.

In embodiments, the crane coupling comprises a plurality of tether points for controlling the orientation of the frame using the crane. In this way, the frame, and in turn a generator mounted to the frame, can be pitched and tilted by adjusting the relative lengths of the tethers connecting to the hoist line. This allows for improved alignment control during the attachment or detachment of the generator.

In embodiments, the second coupling comprises a detachable support member, wherein the detachable support member comprises a frame connector for releasably connecting the detachable support member to the frame and a second mounting interface configured to couple with a corresponding second mounting interface on the nacelle face of the generator. This provides a detachable support member that the generator can be mounted on. As the support member is detachable, the detachable support member can be hoisted by the crane while the generator is mounted to it. With the addition of frame connectors, the detachable support member can either be moved when the hub face of generator is coupled to the frame or when the frame is coupled to the frame connectors. This allows for a versatile support member that allows the generator to be moved in a variety of configurations.

In embodiments, the second mounting interface comprises keying formations for mating with corresponding keying formations provided on the corresponding second mounting interface on the nacelle face. In this way, the keying formations provided on the opposing faces may inter-engage to ensure alignment between these parts.

In embodiments, the keying formations comprise a plurality of pins or apertures configured to mate into corresponding apertures or pins, respectively, provided on the corresponding second mounting interface. In this way, the keying formations provided on the opposing faces may inter-engage to ensure alignment between these parts.

In embodiments, the device further comprises a stand separate to the frame and configured to receive the detachable support member, wherein once received by the stand, the detachable support member is held in an upright position for supporting a generator, mounted to the detachable support member in the second mounted configuration, in an upright orientation. In this way, the generator can be supported in an upright orientation substantially similar to the orientation that the generator is mounted on the nacelle. As such, the pitch of the frame does not need to be significantly adjusted between removal of the frame from the nacelle and subsequent coupling to the detachable support member. In turn, this reduces the time required to couple or release the generator from the detachable support member as less orientation adjustments are needed.

In embodiments, the detachable support member comprises an elongate part and the stand comprises an upright receptacle configured to receive the elongate part for holding the detachable support member in the upright position. In this way, the detachable support member and the stand can be easily connected and/or disconnected, thereby providing enhanced versatility. In particular, a generator mounted to the detachable support member in its second mounting configuration may be lifted up out of the stand to move it, for instance to a horizontal storage position for transport. Conversely, horizontally stored generators can be lifted and connected to the stand via the detachable support member to stow them upright to minimise the deck space used.

In embodiments, the stand further comprises a rotation actuator for rotating a rotatable part of the generator when the generator is mounted to the detachable support member in the second mounted configuration. In this way, the risk of ceasing of the bearings within the generator can be minimised by ensuring lubricant within the bearing does not pool and loading is distributed if the generator is unused for an extended period.

According to a second aspect, there is provided a method of removing a wind turbine generator from a nacelle in an up-tower location to a down-tower location using the wind turbine generator lifting device according to any of the above statements, the method comprising the steps of: hoisting the frame up to the up-tower location using a crane; connecting the first coupling to the hub face of the generator to mount the generator onto the frame in the first mounted configuration; releasing the generator from the nacelle by detaching the nacelle face therefrom; hoisting the frame down from the up-tower location with the generator mounted in the first mounted configuration; at a down-tower location, providing the detachable support member received in the stand such that it is held in the upright position; connecting the second mounting interface of the detachable support member to the corresponding second mounting interface on the nacelle face of the generator in the second mounted configuration; and releasing the frame from the generator by detaching the first coupling from the hub face, with the generator supported by its mounting in the upright orientation to the detachable support member.

In this way, a method of removing a wind turbine generator is provided that allows the generator to be removed from the nacelle without also having to detach the nacelle from the wind turbine tower. This minimises the lifting weight and complexity of this operation and reduces the space requirements on deck to seat the generator once it is down-tower. Furthermore, the detachable support member provides a convenient support structure on which the generator can be mounted so that it can be stored or transported.

According to a third aspect, there is provided a method of conveying a wind turbine generator in a down-tower location using the wind turbine generator lifting device according to any of the above statements, the method comprising the steps of: providing, at a down-tower location, the detachable support member received in the stand such that it is held in the upright position and the generator mounted to the detachable support member in the second mounted configuration; connecting the detachable support member to the frame by the frame connector; hoisting up the frame while the generator is mounted to the detachable support member in the second mounted configuration for removing the detachable support member from the stand; pitching the generator into a horizontal orientation using the crane coupling; placing the generator on its hub face; and releasing the frame by detaching the support member from the frame.

In this way, a method of conveying a wind turbine generator is provided that allows the generator to be easily removed and subsequently stored. The same lifting device can be used to orientate an upright generator into a horizontal orientation for transport on a vehicle or storage.

According to a fourth aspect, there is provided a method of installing a wind turbine generator to a nacelle at an up-tower location using the wind turbine generator lifting device according to any of the above statements, the method comprising the steps of: providing, at a down-tower location, the detachable support member received in the stand such that it is held in the upright position and the generator mounted to the detachable support member in the second mounted configuration; connecting the first coupling to the hub face of the generator to mount the generator onto the frame in the first mounted configuration; releasing the generator from the detachable support member by disconnecting the second mounting interface from the corresponding second mounting interface on the nacelle face of the generator; and hoisting the frame up to the up-tower location using a crane with the generator mounted in the first mounted configuration; attaching the generator to the nacelle in the up-tower location by attaching the nacelle face thereto; and releasing the frame from the generator by disconnecting the first coupling from the hub face of the generator.

In this way, a method of installing a wind turbine generator to a nacelle is provided that allows a generator mounted upright on a detachable support member to be subsequently installed on the nacelle. This thereby allows the generator to be conveyed while minimising the deck space required, and then hoisted up by a crane to the nacelle for installation in that upright orientation. As a result, the weight lifted, and the complexity of the lifting operation is minimised.

Illustrative embodiments of the present invention will now be described with reference to the accompanying drawings in which:
Figure 1 shows a wind turbine generator lifting device according to an illustrative embodiment with a wind turbine generator mounted thereon;
Figure 2 shows the wind turbine generator lifting device of Figure 1, with a wind turbine generator mounted in a second configuration;
Figure 3 shows a wind turbine generator stored horizontally on a pedestal;
Figure 4 shows a wind turbine generator located horizontally on a transport vehicle;
Figure 5 shows a wind turbine generator being removed from a nacelle of a wind turbine using the wind turbine generator lifting device of the illustrative embodiment;
Figure 6 shows the wind turbine generator mounted to the lifting device in the first configuration and being hoisted to a detachable support member fixed into a stand;
Figure 7 shows the wind turbine generator mounted to the detachable support member in the second configuration, with the detachable support member fixed into the stand;
Figure 8 shows the wind turbine generator mounted to the detachable support member in the second configuration, while the frame is being hoisted to connect the detachable support member;
Figure 9 shows the wind turbine generator mounted to the lifting device in the second configuration for adjusting the orientation of the wind turbine generator;
Figure 10 shows the wind turbine generator being placed on a pedestal by the wind turbine generator lifting device;
Figure 11 shows the wind turbine generator mounted on a detachable support member, while the wind turbine generator lifting device is hoisted to connect it thereto;
Figure 12 shows the wind turbine generator mounted to the lifting device in the first configuration being hoisted away from the detachable support member;
Figure 13 shows the wind turbine generator being attached to a nacelle of a wind turbine by the wind turbine generator lifting device;
Figure 14 (a) shows the keying formations provided on the hub side of the generator;
Figure 14(b) shows an enlarged view of the opposing keying formations of the generator and the lifting device's first coupling; and
Figure 15 shows a rotation actuator being used to rotate a generator mounted in the second configuration.

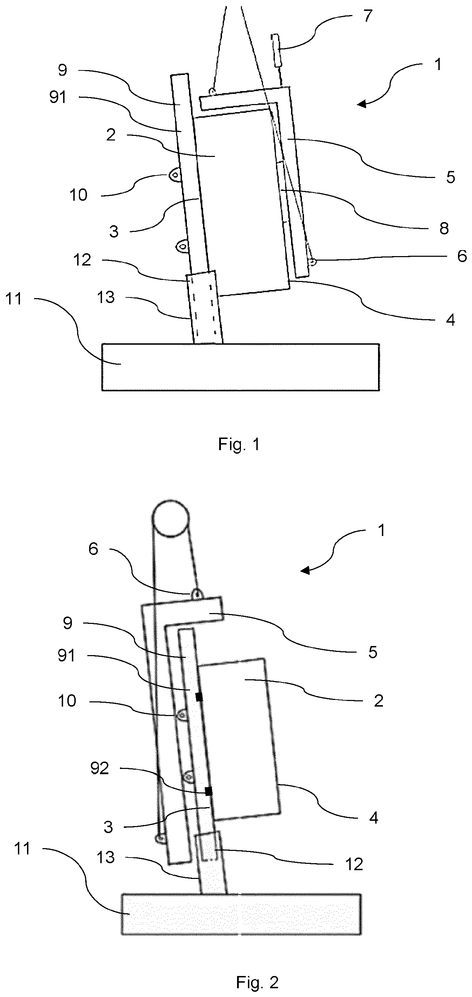

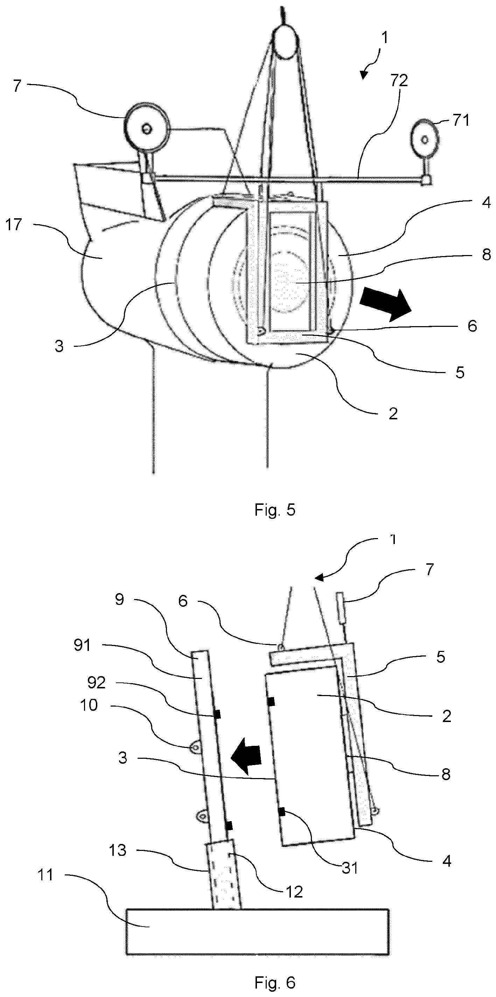

Figure 1 shows a wind turbine generator lifting device 1 according to a first illustrative embodiment. The device 1 provides a lifting tool for use with a crane and other such hoisting systems to convey a wind turbine generator 2 during generator decommissioning, including the removal, transport, repair, servicing and replacement of generators. The generator may be any kind, however, embodiments of the invention are particularly applicable to direct drive generators as they often sit between the nacelle and the rotor hub. Such direct drive generators involve the rotor directly driving a synchronous generator, thereby avoiding the need for a separate gearbox. As such, these units are typically larger than classical gear boxed generators. In this respect, in use, direct drive wind turbine generators 2 are typically connected between a nacelle 17 and a blade hub of a wind turbine and integrate the bearing for rotation of the blade hub and blades relative to the nacelle 17. As such, the generator 2 comprises a nacelle face 3 which has an interface for connecting the generator 2 to the nacelle 17 and a hub face 4 which has an interface for connecting the generator 2 to the blade hub, as shown in Figure 5.

The lifting device 1 has a frame 5 which forms a yoke or carrier for supporting the generator 2 as it is conveyed. In embodiments, the frame 5 may be formed as a cast body or be made from a plurality of beams welded together to create a rigid structure for supporting the generator 2 as it is moved. As shown in Figure 1, in this embodiment, a portion of the frame 5 extends over the top of the generator 2, such that the frame 5 adopts a generally inverted or rotated L-shaped in profile. That is, the frame 5 may comprise two portions. The two portions may be substantially perpendicular to each other. The two portions may be elongate and may be different lengths. For example, one of the two portions may be a top or extended portion. The other one of the two portions may be a base.

The frame 5 is provided with tether points 6 which form a crane coupling. In this embodiment, four tether points are provided, fixed at opposing corners of the frame 5. Two front tether points are provided on the top or extended portion of the frame 5 and are used for primarily bearing the weight of the generator 2 when it is suspended in an upright orientation during hoisting. The location of these tether points 6 on this top or extended portion means that the attachment is more in line with the centre of gravity of the generator 2. Two bottom tether points 6 are provided near the base of the frame 5. Together the distributed tether points 6 allow the orientation of the frame 5 to be controlled by adjusting the lengths of the tethers as the assembly is suspended by the crane. This thereby allows the chassis formed by the frame 5 to be hoisted, tilted and pitched forward and back. Consequently, the orientation of a generator mounted to the frame 5 can be controlled during hoisting operations.

As shown in Figure 5, the device 1 further comprises a yaw control system 7 that is releasably coupled to the frame 5. The yaw control system 7 functions as a controllable drone with one or more propellers 71 actuatable for yawing the frame 5 in the air about the hoisting line as it is hoisted by the crane. Preferably, at least two propellers 71 are provided, mounted to lateral arms 72 which extend from the frame 5 to provide a rotational moment to the frame 5.

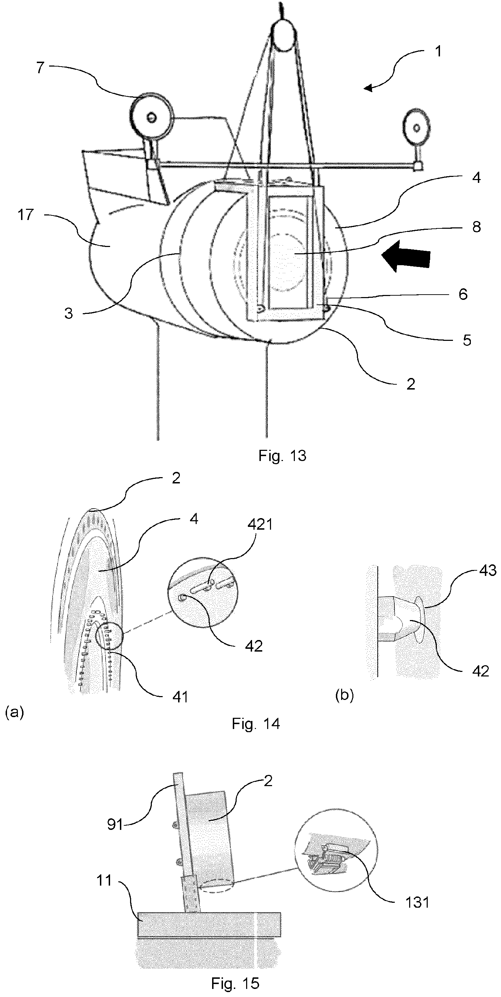

Turning back to Figure 1, the device 1 is provided with a first coupling 8 fixed to the frame 5, which is connectable to the hub face 4 for mounting the generator 2 onto the frame 5 in a first mounted configuration. In embodiments, this first coupling 8 comprises a hydraulic actuator for actioning the connection to the hub face. The hydraulic actuator may be operated remotely, for instance down-tower or from the crane to effect the connection to the hub face 4, with the hydraulic actuator actuating claws to lock the coupling to the generator hub face 4. The first coupling 8 comprises a first mounting interface configured to couple with a corresponding first mounting interface 41 on the hub face 4 of the generator 2, as shown in Figure 14(a). In this embodiment, the first mounting interface which connects to the hub face 4 of the generator 2 is the same design as the interface used to connect the blade hub to the generator 2. As such, once the blade hub is removed, the frame 5 can replace it by connecting into the same interface, thereby fixing the generator 2 to the device 1.

In this connection, as shown in Figure 14(b) in this embodiment, the first mounting interface comprises keying formations 43 for mating with corresponding keying formations 42 provided on the corresponding first mounting interface 41 on the hub face 4. The keying formations 42,43 comprise a plurality of pins or apertures configured to mate into corresponding apertures or pins, respectively, provided on the opposing interface. The plurality of pins or apertures are arranged circumferentially around the hub face 4, as shown in Figure 14(a). The plurality of pins may include a plurality of threaded pins 421, as shown in Figure 14(a) which allow these individual pins to be secured to the corresponding apertures provided on the opposing interface using a fastener (e.g., a nut).

Turning back to Figures 1 and **2****,** the lifting device 1 further comprises a second coupling 9 connectable to the nacelle face 3 for mounting the generator 2 onto the frame 5 in a second mounted configuration. The second coupling 9 comprises a detachable support member 91. As shown in Figure **2****,** the detachable support member 91 comprises a frame connector 10 for releasably connecting the detachable support member 91 to the frame 5. In this embodiment, the frame connector 10 comprises a plurality of locking apertures which are alignable to corresponding apertures provided on the frame 5. Once aligned, the hydraulic actuator may again be used for actioning the connection to the detachable support member 91. In particular, the coupling provided on the detachable support member 91 may be similar to the coupling on the hub face 4, and therefore the hydraulic actuator may be operated remotely to actuate claws to lock the detachable support member 91 to the frame 5.

The detachable support member 91 comprises a second mounting interface 92 configured to couple with a corresponding second mounting interface on the nacelle face 3 of the generator 2. Preferably, the second mounting interface 92 which connects to the nacelle face 3 of the generator 2 is the same design as the interface for connecting the generator 2 to the nacelle 17. As such, the existing mounting interfaces provided on the generator 2 can be repurposed for mounting the generator 2 onto the frame 5.

The detachable support member 91 can be formed as a plate-like body for supporting the generator **2,** with the second mounting interface 92 provided on one face of the plate. In another embodiment, the detachable support member 91 is formed as a frame constructed as a plurality of interconnected welded beams, with the second mounting interface being provided on one face of this supporting member frame. In this arrangement, the weight of the detachable support member 91 may be minimised.

As with the first mounting interface 8 described above in relation to Figure 14(a) and (b), the second mounting interface 92 may comprise keying formations for mating with corresponding keying formations provided on the corresponding second mounting interface on the nacelle face 3. The keying formations in this example again comprise a plurality of pins or apertures configured to mate into corresponding apertures or pins, respectively, provided on the corresponding second mounting interface. The plurality of pins or apertures may be arranged circumferentially around the nacelle face 3. The plurality of pins can also again include threaded pins, such that pins can be individually secured to the corresponding keying formations provided on the corresponding second mounting interface on the nacelle face 3 by a fastener (e.g., a nut).

In this embodiment, the device 1 further includes a separate stand 11 which is configured to receive the detachable support member 91 and support it in an upright position. As such, once received by the stand 11, the detachable support member 91 can support the generator 2, mounted to the detachable support member 91, in an upright orientation. This allows the generator 2 to be stowed, for example for carriage on the deck of a vessel, without occupying significant deck space.

As show by the dashed lines in Figure 1, the detachable support member 91 comprises an elongate part 12, and the stand 11 comprises an upright receptacle 13 configured to receive the elongate part 12. This releasably fixes the support member 91 to the stand 11 for holding the detachable support member 91 in an upright orientation. In this example, the upright receptacle 13 is not perpendicular to the stand 11, but is rather offset at an angle of 0 to 20 degrees to the vertical axis, more preferably 5 to 10 degrees from the vertical axis (perpendicular to the stand 11). As such, the generator 2 is mounted to the detachable support member 91 at an angle that is substantially similar to the angle the generator 2 is mounted on the nacelle 17. As a result, the orientation of the frame 5 does not need to be adjusted or significantly adjusted to mount the generator 2 to the detachable support member 91. This may thereby reduce the overall time and complexity for removing and conveying the generator 2.

As shown in Figure 15, in embodiments, the stand 11 may further comprise a rotation actuator 131 for rotating the rotatable part of the generator 2 when the generator 2 is mounted to the detachable support member 91 in the second mounted configuration. The rotation actuator 131 can be located on the stand 11 directly below the generator **2.** The rotation actuator can be periodically, or continuously, operated to rotate the rotatable part of the generator 2, which may mitigate the risk still stand marks developing on the bearing and lubricant within the bearing drying out or collecting in one location (i.e., at the bottom of the bearing closest to the stand 11) if the generator 2 is left unused for an extended period.

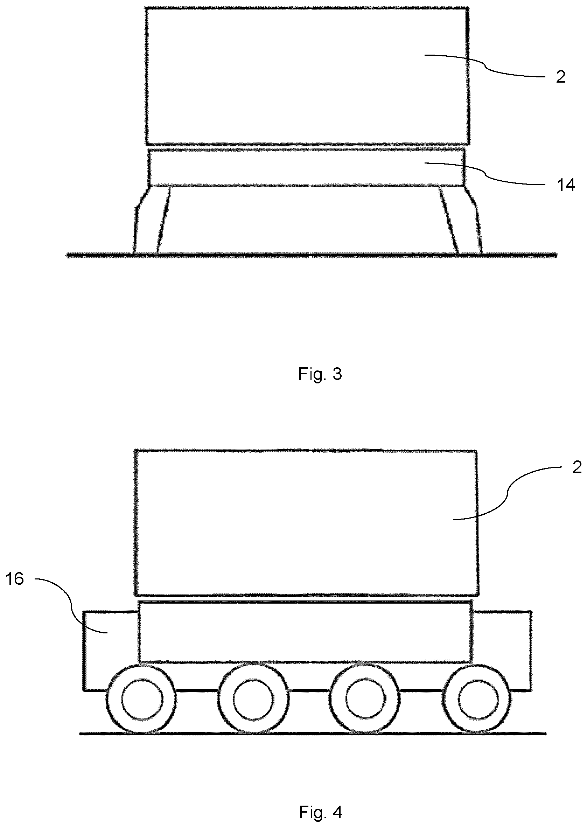

Figures 3 and 4 show known storage and conveying methods for wind turbine generators. Figure 3 shows a pedestal 14 for supporting the generator 2 in a horizontal position for storage or during transportation. Figure 4 shows a generator 2 loaded onto a transport vehicle 16, such as an SPMT or a heavy load trailer, by under-driving to minimise lifting of a heavy component. These known storage and transportation methods may be used in combination with the embodiments of the invention.

A method of removing a wind turbine generator 2 from a nacelle 17 in an up-tower location to a down-tower location using the wind turbine generator lifting device 1 will now be described with reference to Figure 5 to 7. First, the method comprises the step of hoisting the frame 5 up to the up-tower location using a crane, as shown in Figure 5. To achieve alignment between the frame 5 and the hub face 4 of the generator 2, the yaw of the frame 5 may be adjusted using the yaw control system 7, and the pitch of the frame 5 may be adjusted by altering the lengths of the tethers forming the crane coupling 6. Once aligned, the first coupling 8 of the frame 5 is connected to the interface formed on the hub face 4 of the generator 2 to mount the generator 2 onto the frame 5. This results in the generator 2 being mounted in a first mounted configuration. After connection, in which the first mounting interface has been coupled with the corresponding first mounting interface on the hub face 4 of the generator 2, the generator 2 can be released from the nacelle 17 by detaching the nacelle face 3 therefrom. Consequently, the frame 5 can be hoisted down from the up-tower location, along with the generator 2 mounted in this aforementioned first mounted configuration.

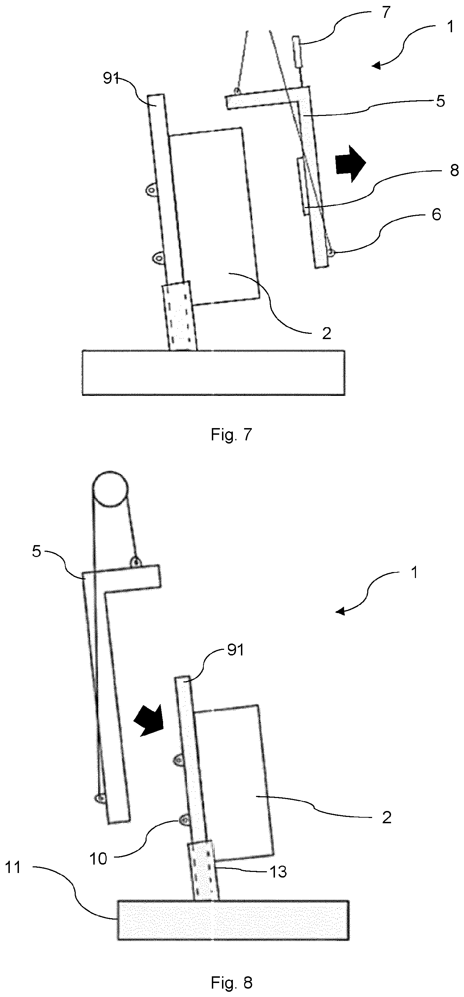

As shown in Figure 6, at a down-tower location, for instance on the deck of a crane vessel or nearby vessel, a detachable support member 91 can be provided, received in the stand 11 such that the detachable support member 91 is held in the upright position. As shown in Figure 6, the second mounting interface 92 of the detachable support member 91 is provided exposed on the inclined face of the detachable support member 91 for receiving the corresponding second mounting interface 31 on the nacelle face 3 of the generator 2. Once connected, the frame 5 can be released from the mounted generator 2 by detaching the first coupling 8 from the hub face 4. As a result, the generator 2 is left supported by its mounting to the detachable support member 91 in the upright orientation, as shown in Figure 7. This provides a compact storage configuration which would allow multiple generators 2, such as new replacement generators or used decommissioned generators, to be stowed on deck and transported back onshore for refurbishment or recycling.

A method of conveying a wind turbine generator 2 in a down-tower location using the wind turbine generator lifting device 1 will now be described with reference to Figures 8 to 10. At the down-tower location, as described above, the detachable support member 91 with a generator 2 mounted thereon may be stowed in the stand 11 such that the generator 2 is held in the upright position. As shown in Figure 8, the detachable support member 91 can then be connected to the frame 5 using the frame connector 10. The frame connector 10 may be provided as a plate similar to the interface used for the connection to the hub face 4. Pad-eyes may also be provided for interfacing with shackles for lifting with a crane without use of the lifting yoke (e.g. for loading onto a cargo vessel). Once connected, the frame 5 can be hoisted up by the crane while the generator 2 remains mounted to the detachable support member 91 in the second mounted configuration. This lifting action causes the detachable support member 91 to be withdrawn out of the upright receptacle 13 to release the detachable support member 91 and generator 2 from the stand 11.

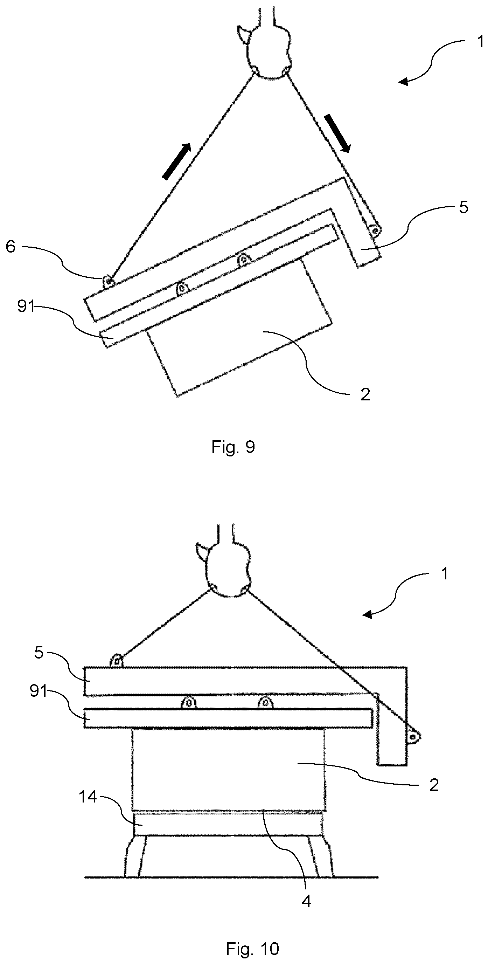

As shown in Figure 9, once released and elevated, the generator 2 can be pitched into a horizontal orientation using the tether points 6. The arrows shown along the tethers in Figure 9 indicate an illustrative direction the tethers can be drawn to effect the rotation forward. In this way, the pitch of the frame 5 can be controlled between a vertical orientation and a horizontal orientation. Once the generator 2 is horizontally orientated, the generator 2 can then be placed on its hub face 4 for conventional storage or transport operations. For example, figure 10 shows the generator 2 being placed onto a pedestal 14, like that shown in Figure 3. The generator 2 can be released from the frame 5 by detaching the detachable support member 91 from the frame 5.

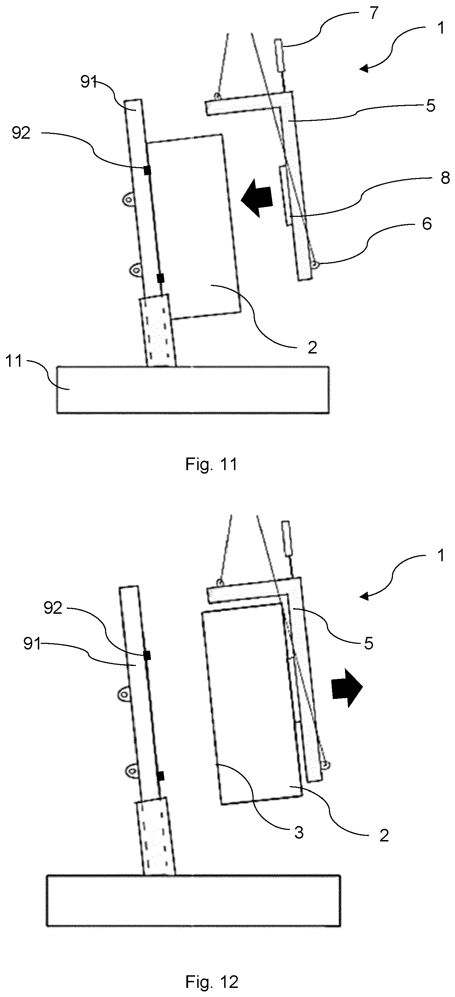

A method of conveying a wind turbine generator 2 in a down-tower location using the wind turbine generator lifting device 1 will now be described with reference to Figures 11 to 13. As shown in Figure 11, at a down-tower location, the detachable support member 91 may again be received in the stand 11 such that it is held in the upright position, with the generator 2 mounted thereto in the second mounted configuration.

As shown in Figure 11, the first coupling 8 of the frame 5 can then be connected to the hub face 4 of the generator 2 to mount the generator 2 onto the frame 5 in the first mounted configuration. Once connected, the generator 2 can be released from the detachable support member 91 by disconnecting the second mounting interface 92 from the corresponding second mounting interface on the nacelle face 3 of the generator 2. After second mounting interface is disconnected, the frame 5 can be hoisted up to the up-tower location using a crane with the generator 2 mounted in the first mounted configuration, as shown in Figure 12.

Once the frame 5 with the generator 2 is hoisted up the nacelle 17, the frame 5 can be oriented by the crane and yaw control system 7 to enable the generator 2 to be attached to the nacelle 17 in the up-tower location. The generator 2 is coupled to the nacelle 17 by attaching the nacelle face 3 to the interface of the nacelle 17, as shown in Figure 13. After the generator 2 is coupled to the nacelle 17, the frame 5 can be released from the generator 2 by disconnecting the first coupling 8 from the hub face 4 of the generator 2.

It will be understood that the embodiment illustrated above show applications of the invention only for the purposes of illustration. In practice the invention may be applied to many different configurations, the detailed embodiments being straightforward for those skilled in the art to implement.

For example, it will be understood that although in the above illustrative embodiments, the lifting device makes use of existing couplings on the generator, in other embodiments, the hub face and nacelle face of the generator may be provided with specific hoisting couplings, and the couplings provided on the lifting device may be configured to connect to those specific hoisting couplings.

## Claims

1. A wind turbine generator lifting device (1) for conveying a wind turbine generator (2), wherein the wind turbine generator (2) has a hub face (4) to which a blade hub is attachable to the generator (2) and a nacelle face (3) to which the generator (2) is attachable to a nacelle, the device (1) comprising:
a frame (5) having a crane coupling (6) for hoisting by a crane; and
a first coupling (8) connectable to the hub face (4) for mounting the generator (2) onto the frame (5) in a first mounted configuration;
**characterised in that** the device comprises a second coupling (9) connectable to the nacelle face (3) for mounting the generator (2) onto the frame (5) in a second mounted configuration.

2. A wind turbine generator lifting device (1) according to claim 1, wherein the first coupling (8) comprises a first mounting interface configured to couple with a corresponding first mounting interface on the hub face (4) of the generator (2) .

3. A wind turbine generator lifting device (1) according to claim 2, wherein the first mounting interface comprises keying formations (43) for mating with corresponding keying formations (42) provided on the corresponding first mounting interface (41) on the hub face (4).

4. A wind turbine generator lifting device (1) according to claim 3, wherein the keying formations (42, 43) comprise a plurality of pins or apertures configured to mate into corresponding apertures or pins, respectively, provided on the corresponding first mounting interface.

5. A wind turbine generator lifting device (1) according to any preceding claim, further comprising a yaw control system (7) having at least one propeller (71) actuatable for yawing the frame (5) in the air when it is hoisted by the crane.

6. A wind turbine generator lifting device (1) according to any preceding claim, wherein the crane coupling (6) comprises a plurality of tether points (6) for controlling the orientation of the frame (5) using the crane.

7. A wind turbine generator lifting device (1) according to any preceding claim, wherein the second coupling (9) comprises a detachable support member (91), wherein the detachable support member (91) comprises a frame connector (10) for releasably connecting the detachable support member (91) to the frame (5) and a second mounting interface (92) configured to couple with a corresponding second mounting interface on the nacelle face (3) of the generator (2).

8. A wind turbine generator lifting device (1) according to claim 7, wherein the second mounting interface (92) comprises keying formations for mating with corresponding keying formations provided on the corresponding second mounting interface (92) on the nacelle face (3).

9. A wind turbine generator lifting device (1) according to claim 8, wherein the keying formations comprise a plurality of pins or apertures configured to mate into corresponding apertures or pins, respectively, provided on the corresponding second mounting interface (92).

10. A wind turbine generator lifting device (1) according to any of claims 7 to 9, further comprising a stand (11) separate to the frame (5) and configured to receive the detachable support member (91), wherein once received by the stand (11), the detachable support member (91) is held in an upright position for supporting a generator (2), mounted to the detachable support member (91) in the second mounted configuration, in an upright orientation.

11. A wind turbine generator lifting device (1) according to claim 10, wherein the detachable support member (91) comprises an elongate part (12) and the stand (11) comprises an upright receptacle (13) configured to receive the elongate part (12) for holding the detachable support member (91) in the upright position.

12. A wind turbine generator lifting device (1) according to claim 10 or 11, wherein the stand (11) further comprises a rotation actuator (131) for rotating a rotatable part of the generator (2) when the generator (2) is mounted to the detachable support member (91) in the second mounted configuration.

13. A method of removing a wind turbine generator (2) from a nacelle in an up-tower location to a down-tower location using the wind turbine generator lifting device (1) according to any of claims 10-12, the method comprising the steps of:
hoisting the frame (5) up to the up-tower location using a crane;
connecting the first coupling (8) to the hub face (4) of the generator (2) to mount the generator (2) onto the frame (5) in the first mounted configuration;
releasing the generator (2) from the nacelle by detaching the nacelle face (3) therefrom;
hoisting the frame (5) down from the up-tower location with the generator (2) mounted in the first mounted configuration;
at a down-tower location, providing the detachable support member (91) received in the stand (11) such that it is held in the upright position;
connecting the second mounting interface (92) of the detachable support member (91) to the corresponding second mounting interface (92) on the nacelle face (3) of the generator (2) in the second mounted configuration; and
releasing the frame (5) from the generator (2) by detaching the first coupling (8) from the hub face (4), with the generator (2) supported by its mounting in the upright orientation to the detachable support member (91).

14. A method of conveying a wind turbine generator (2) in a down-tower location using the wind turbine generator lifting device (1) according to any of claims 10-12, the method comprising the steps of:
providing, at a down-tower location, the detachable support member (91) received in the stand (11) such that it is held in the upright position and the generator (2) mounted to the detachable support member (91) in the second mounted configuration;
connecting the detachable support member (91) to the frame (5) by the frame connector;
hoisting up the frame (5) while the generator (2) is mounted to the detachable support member (91) in the second mounted configuration for removing the detachable support member (91) from the stand (11);
pitching the generator (2) into a horizontal orientation using the crane coupling (6);
placing the generator (2) on its hub face (4); and
releasing the frame (5) by detaching the support member from the frame (5).

15. A method of installing a wind turbine generator (2) to a nacelle at an up-tower location using the wind turbine generator lifting device (1) according to any of claims 10-12, the method comprising the steps of:
providing, at a down-tower location, the detachable support member (91) received in the stand (11) such that it is held in the upright position and the generator (2) mounted to the detachable support member (91) in the second mounted configuration;
connecting the first coupling (8) to the hub face (4) of the generator (2) to mount the generator (2) onto the frame (5) in the first mounted configuration;
releasing the generator (2) from the detachable support member (91) by disconnecting the second mounting interface (92) from the corresponding second mounting interface on the nacelle face (3) of the generator (2); and
hoisting the frame (5) up to the up-tower location using a crane with the generator (2) mounted in the first mounted configuration;
attaching the generator (2) to the nacelle in the up-tower location by attaching the nacelle face (3) thereto; and
releasing the frame (5) from the generator (2) by disconnecting the first coupling (8) from the hub face (4) of the generator (2).

## Patentansprüche

1. Windturbinengenerator-Hebevorrichtung (1) für das Befördern eines Windturbinengenerators (2), wobei der Windturbinengenerator (2) eine Nabenseite (4) aufweist, auf der eine Rotornabe an dem Generator (2) aufsetzbar ist, und einer Gondelseite (3), auf der der Generator (2) an einer Gondel aufsetzbar ist, die Vorrichtung (1) umfassend:
einen Rahmen (5) mit einer Krankupplung (6) zum Anheben mit einem Kran; und
eine erste Kupplung (8), die mit der Nabenseite (4) verbindbar ist, um den Generator (2) an dem Rahmen (5) in einer ersten montierten Konfiguration zu befestigen;
**dadurch gekennzeichnet, dass** die Vorrichtung eine zweite Kupplung (9) umfasst, die mit der Gondelseite (3) verbindbar ist, um den Generator (2) an dem Rahmen (5) in einer zweiten montierten Konfiguration zu befestigen.

2. Windturbinengenerator-Hebevorrichtung (1) nach Anspruch 1, wobei die erste Kupplung (8) eine erste Montageschnittstelle umfasst, die so konfiguriert ist, dass sie mit einer entsprechenden ersten Montageschnittstelle auf der Nabenseite (4) des Generators (2) gekoppelt wird.

3. Windturbinengenerator-Hebevorrichtung (1) nach Anspruch 2, wobei die erste Montageschnittstelle Passformelemente (43) umfasst, um sie mit den entsprechenden Passformelementen (42) zusammenzufügen, die an der entsprechenden ersten Montageschnittstelle (41) auf der Nabenseite (4) bereitgestellt sind.

4. Windturbinengenerator-Hebevorrichtung (1) nach Anspruch 3, wobei die Passformelemente (42, 43) eine Vielzahl von Stiften oder Öffnungen aufweisen, die so konfiguriert sind, dass sie mit den entsprechenden Öffnungen bzw. Stiften, die an der entsprechenden ersten Montageschnittstelle bereitgestellt sind, zusammenpassen.

5. Windturbinengenerator-Hebevorrichtung (1) nach einem der vorstehenden Ansprüche, ferner umfassend ein Giersteuerungssystem (7) mit mindestens einer Zugrolle (71), die betätigbar ist, um den Rahmen (5) in der Luft zu gieren, wenn er von dem Kran angehoben wird.

6. Windturbinengenerator-Hebevorrichtung (1) nach einem der vorstehenden Ansprüche, wobei die Krankupplung (6) eine Vielzahl von Haltepunkten (6) zum Steuern der Ausrichtung des Rahmens (5) unter Verwendung des Krans umfasst.

7. Windturbinengenerator-Hebevorrichtung (1) nach einem der vorstehenden Ansprüche, wobei die zweite Kupplung (9) ein abnehmbares Halteelement (91) umfasst, wobei das abnehmbare Halteelement (91) ein Rahmenanschlussteil (10) umfasst, um das abnehmbare Halteelement (91) abnehmbar mit dem Rahmen (5) zu verbinden, und eine zweite Montageschnittstelle (92) umfasst, die so konfiguriert ist, dass sie mit einer entsprechenden zweiten Montageschnittstelle auf der Gondelseite (3) des Generators (2) gekoppelt wird.

8. Windturbinengenerator-Hebevorrichtung (1) nach Anspruch 7, wobei die zweite Montageschnittstelle (92) Passformelemente umfasst, um sie mit entsprechenden Passformelementen zusammenzufügen, die an der entsprechenden zweiten Montageschnittstelle (92) auf der Gondelseite (3) bereitgestellt sind.

9. Windturbinengenerator-Hebevorrichtung (1) nach Anspruch 8, wobei die Passformelemente eine Vielzahl von Stiften oder Öffnungen aufweisen, die so konfiguriert sind, dass sie mit den entsprechenden Öffnungen bzw. Stiften, die an der entsprechenden zweiten Montageschnittstelle (92) bereitgestellt sind, zusammenpassen.

10. Windturbinengenerator-Hebevorrichtung (1) nach einem der Ansprüche 7 bis 9, ferner umfassend einen Sockel (11) getrennt von dem Rahmen (5) und so konfiguriert, dass er das abnehmbare Halteelement (91) aufnimmt, wobei, sobald er von dem Sockel (11) aufgenommen wurde, das abnehmbare Halteelement (91) in einer vertikalen Position gehalten wird, um einen Generator (2) zu halten, der an dem abnehmbaren Halteelement (91) in der zweiten montierten Konfiguration, in einer vertikalen Ausrichtung montiert ist.

11. Windturbinengenerator-Hebevorrichtung (1) nach Anspruch 10, wobei das abnehmbare Halteelement (91) ein längliches Teil (12) umfasst und der Sockel (11) eine vertikale Aufnahme (13) umfasst, die so konfiguriert ist, dass sie das längliche Teil (12) aufnimmt, um das abnehmbare Halteelement (91) in der vertikalen Position zu halten.

12. Windturbinengenerator-Hebevorrichtung (1) nach Anspruch 10 oder 11, wobei der Sockel (11) ferner einen Rotationsaktuator (131) zum Drehen eines drehbaren Teils des Generators (2) umfasst, wenn der Generator (2) an dem abnehmbaren Halteelement (91) in der zweiten montierten Konfiguration befestigt ist.

13. Verfahren zum Entfernen eines Windturbinengenerators (2) aus einer Gondel in einem Turmoberbereich zu einer Position im Turmunterbereich unter Verwendung der Windturbinengenerator-Hebevorrichtung (1) nach einem der Ansprüche 10 bis 12, das Verfahren umfassend die Schritte:
Anheben des Rahmens (5) in den Turmoberbereich unter Verwendung eines Krans;
Verbinden der ersten Kupplung (8) mit der Nabenseite (4) des Generators (2), um den Generator (2) an dem Rahmen (5) in der ersten montierten Konfiguration zu befestigen;
Lösen des Generators (2) von der Gondel durch Abnehmen der Gondelseite (3) davon;
Absenken des Rahmens (5) aus dem Turmoberbereich mit dem Generator (2), der in der ersten montierten Konfiguration befestigt ist;
Bereitstellen, in einem Turmunterbereich, des abnehmbaren Halteelements (91), das in den Sockel (11) eingesetzt ist, sodass es in der vertikalen Position gehalten wird;
Verbinden der zweiten Montageschnittstelle (92) des abnehmbaren Halteelements (91) mit der entsprechenden zweiten Montageschnittstelle (92) auf der Gondelseite (3) des Generators (2) in der zweiten montierten Konfiguration; und
Lösen des Rahmens (5) von dem Generator (2) durch Abnehmen der ersten Kupplung (8) von der Nabenseite (4), wobei der Generator (2) von seiner Befestigung in der vertikalen Ausrichtung an dem abnehmbaren Halteelement (91) gehalten wird.

14. Verfahren zum Befördern eines Windturbinengenerators (2) zu einem Turmunterbereich unter Verwendung der Windturbinengenerator-Hebevorrichtung (1) nach einem der Ansprüche 10 bis 12, das Verfahren umfassend die Schritte:
Bereitstellen, in einem Turmunterbereich, des abnehmbaren Halteelements (91), das in den Sockel (11) eingesetzt ist, sodass es in der vertikalen Position gehalten wird, und des Generators (2), der an dem abnehmbaren Halteelement (91) in der zweiten montierten Konfiguration befestigt ist;
Verbinden des abnehmbaren Halteelements (91) mit dem Rahmen (5) über das Rahmenanschlussteil;
Anheben des Rahmens (5), während der Generator (2) an dem abnehmbaren Halteelement (91) in der zweiten montierten Konfiguration befestigt ist, um das abnehmbare Halteelement (91) aus dem Sockel (11) zu entnehmen;
Neigen des Generators (2) in eine horizontale Ausrichtung unter Verwendung der Krankupplung (6);
Platzieren des Generators (2) auf seiner Nabenseite (4); und
Lösen des Rahmens (5) durch Abnehmen des Halteelements von dem Rahmen (5).

15. Verfahren zum Installieren eines Windturbinengenerators (2) an einer Gondel in einem Turmoberbereich unter Verwendung der Windturbinengenerator-Hebevorrichtung (1) nach einem der Ansprüche 10 bis 12, das Verfahren umfassend die Schritte:
Bereitstellen, in einem Turmunterbereich, des abnehmbaren Halteelements (91), das in den Sockel (11) eingesetzt ist, sodass es in der vertikalen Position gehalten wird, und des Generators (2), der an dem abnehmbaren Halteelement (91) in der zweiten montierten Konfiguration befestigt ist;
Verbinden der ersten Kupplung (8) mit der Nabenseite (4) des Generators (2), um den Generator (2) an dem Rahmen (5) in der ersten montierten Konfiguration zu befestigen;
Lösen des Generators (2) von dem abnehmbaren Halteelement (91) durch Trennen der zweiten Montageschnittstelle (92) von der entsprechenden zweiten Montageschnittstelle auf der Gondelseite (3) des Generators (2); und
Anheben des Rahmens (5) in den Turmoberbereich unter Verwendung eines Krans mit dem Generator (2), der in der ersten montierten Konfiguration befestigt ist;
Befestigen des Generators (2) an der Gondel im Turmoberbereich durch Befestigen der Gondelseite (3) daran; und
Lösen des Rahmens (5) von dem Generator (2) durch Trennen der ersten Kupplung (8) von der Nabenseite (4) des Generators (2).

## Revendications

1. Dispositif de levage de générateur d'éolienne (1) destiné à transporter un générateur d'éolienne (2), dans lequel le générateur d'éolienne (2) présente une face du moyeu (4) à laquelle un moyeu de pale peut être fixé au générateur (2) et une face de nacelle (3) à laquelle le générateur (2) peut être fixé à une nacelle, le dispositif (1) comprenant :
un cadre (5) présentant un accouplement de grue (6) destiné au levage par une grue ; et
un premier accouplement (8) pouvant être relié à la face du moyeu (4) destiné à monter le générateur (2) sur le cadre (5) dans une première configuration montée ;
**caractérisé en ce que** le dispositif comprend un second accouplement (9) pouvant être relié à la face de nacelle (3) destiné à monter le générateur (2) sur le cadre (5) dans une seconde configuration montée.

2. Dispositif de levage de générateur d'éolienne (1) selon la revendication 1, dans lequel le premier accouplement (8) comprend une première interface de montage conçue pour s'accoupler avec une première interface de montage correspondante sur la face du moyeu (4) du générateur (2).

3. Dispositif de levage de générateur d'éolienne (1) selon la revendication 2, dans lequel la première interface de montage comprend des formations de clés (43) destinées à s'accoupler avec des formations de clés correspondantes (42) prévues sur la première interface de montage correspondante (41) sur la face du moyeu (4).

4. Dispositif de levage de générateur d'éolienne (1) selon la revendication 3, dans lequel les formations de clés (42, 43) comprennent une pluralité de broches ou d'ouvertures conçues pour s'accoupler dans des ouvertures ou des broches correspondantes, respectivement, prévues sur la première interface de montage correspondante.

5. Dispositif de levage de générateur d'éolienne (1) selon une quelconque revendication précédente, comprenant en outre un système de commande de lacet (7) présentant au moins une hélice (71) actionnable destinés à imprimer un mouvement de lacet au cadre (5) dans l'air lorsqu'il est soulevé par la grue.

6. Dispositif de levage de générateur d'éolienne (1) selon une quelconque revendication précédente, dans lequel l'accouplement de grue (6) comprend une pluralité de points d'attache (6) destinés à commander l'orientation du cadre (5) à l'aide de la grue.

7. Dispositif de levage de générateur d'éolienne (1) selon une quelconque revendication précédente, dans lequel le second accouplement (9) comprend un élément de support détachable (91), dans lequel l'élément de support détachable (91) comprend un élément de liaison du cadre (10) destinée à relier de manière libérable l'élément de support détachable (91) au cadre (5) et une seconde interface de montage (92) conçue pour s'accoupler avec une seconde interface de montage correspondante sur la face de la nacelle (3) du générateur (2).

8. Dispositif de levage de générateur d'éolienne (1) selon la revendication 7, dans lequel la seconde interface de montage (92) comprend des formations de clés destinées à s'accoupler avec des formations de clés correspondantes prévues sur la seconde interface de montage correspondante (92) sur la face de la nacelle (3).

9. Dispositif de levage de générateur d'éolienne (1) selon la revendication 8, dans lequel les formations de clés comprennent une pluralité de broches ou d'ouvertures conçues pour s'accoupler dans des ouvertures ou des broches correspondantes, respectivement, prévues sur la seconde interface de montage correspondante (92).

10. Dispositif de levage de générateur d'éolienne (1) selon l'une quelconque des revendications 7 à 9, comprenant en outre un support (11) séparé du cadre (5) et conçu pour recevoir l'élément de support détachable (91), dans lequel, une fois reçu par le support (11), l'élément de support détachable (91) est maintenu dans une position verticale destiné à supporter un générateur (2), monté sur l'élément de support détachable (91) dans la seconde configuration montée, dans une orientation verticale.

11. Dispositif de levage de générateur d'éolienne (1) selon la revendication 10, dans lequel l'élément de support détachable (91) comprend une partie allongée (12) et le support (11) comprend un réceptacle vertical (13) conçu pour recevoir la partie allongée (12) destinée à maintenir l'élément de support détachable (91) dans la position verticale.

12. Dispositif de levage de générateur d'éolienne (1) selon la revendication 10 ou 11, dans lequel le support (11) comprend en outre un actionneur de rotation (131) destiné à faire tourner une partie rotative du générateur (2) lorsque le générateur (2) est monté sur l'élément de support détachable (91) dans la seconde configuration montée.

13. Procédé d'enlèvement d'un générateur d'éolienne (2) à partir d'une nacelle dans un emplacement en haut de la tour vers un emplacement en bas de la tour à l'aide du dispositif de levage de générateur d'éolienne (1), selon l'une quelconque des revendications 10 à 12, le procédé comprenant les étapes consistant à :
lever le cadre (5) jusqu'à l'emplacement en haut de la tour à l'aide d'une grue ;
relier le premier accouplement (8) à la face du moyeu (4) du générateur (2) pour monter le générateur (2) dans le cadre (5) dans la première configuration montée ;
libérer le générateur (2) de la nacelle en détachant la face de la nacelle (3) de celle-ci ;
abaisser le cadre (5) depuis l'emplacement en haut de la tour avec le générateur (2) monté dans la première configuration montée ;
au niveau d'un emplacement en bas de la tour, fournir l'élément de support détachable (91) reçu dans le socle (11) de sorte qu'il soit maintenu en position verticale ;
relier la seconde interface de montage (92) de l'élément de support détachable (91) à la seconde interface de montage correspondante (92) sur la face de la nacelle (3) du générateur (2) dans la seconde configuration montée ; et
libérer le cadre (5) du générateur (2) en détachant le premier accouplement (8) de la face du moyeu (4), le générateur (2) étant supporté par son montage en position verticale par rapport à l'élément de support détachable (91).

14. Procédé de transport d'un générateur d'éolienne (2) dans un emplacement au bas de la tour à l'aide du dispositif de levage de générateur d'éolienne (1) selon l'une quelconque des revendications 10 à 12, le procédé comprenant les étapes consistant à :
fournir, au niveau d'un emplacement en bas de la tour, l'élément de support détachable (91) reçu dans le socle (11) de sorte qu'il soit maintenu en position verticale et le générateur (2) monté sur l'élément de support détachable (91) dans la seconde configuration montée ;
relier l'élément de support détachable (91) au cadre (5) par l'élément de liaison du cadre ;
lever le cadre (5) pendant que le générateur (2) est monté sur l'élément de support détachable (91) dans la seconde configuration montée destinée à enlever l'élément de support détachable (91) du socle (11) ;
incliner le générateur (2) dans une orientation horizontale à l'aide de l'accouplement de la grue (6) ;
placer le générateur (2) sur sa face de moyeu (4) ; et
libérer le cadre (5) en détachant l'élément de support du cadre (5).

15. Procédé d'installation d'un générateur d'éolienne (2) à une nacelle au niveau d'un emplacement en haut de la tour à l'aide du dispositif de levage de générateur d'éolienne (1) selon l'une quelconque des revendications 10 à 12, le procédé comprenant les étapes consistant à :
fournir, au niveau d'un emplacement en bas de la tour, l'élément de support détachable (91) reçu dans le socle (11) de sorte qu'il soit maintenu en position verticale et le générateur (2) monté sur l'élément de support détachable (91) dans la seconde configuration montée ;
relier le premier accouplement (8) à la face du moyeu (4) du générateur (2) pour monter le générateur (2) dans le cadre (5) dans la première configuration montée ;
libérer le générateur (2) de l'élément de support détachable (91) en désaccouplant la seconde interface de montage (92) de la seconde interface de montage correspondante sur la face de la nacelle (3) du générateur (2) ; et
lever le cadre (5) depuis l'emplacement en haut de la tour à l'aide d'une grue avec le générateur (2) monté dans la première configuration montée ;
fixer le générateur (2) à la nacelle dans l'emplacement en haut de la tour en fixant la face de la nacelle à celui-ci (3) ; et
libérer le cadre (5) du générateur (2) en désaccouplant le premier accouplement (8) de la face du moyeu (4) du générateur (2).
